# EUROPÄISCHE PATENTSCHRIFT

(11) **EP 0 450 511 B1**
(45) Veröffentlichungstag und Bekanntmachung des Hinweises auf die Patenterteilung: **28.06.1995**
(21) Anmeldenummer: 91104981.5
(22) Anmeldetag: 28.03.1991
(51) Int. Cl.: C08F 265/02, C08F 279/02, C08L 51/04

(54) **Teilförmiges Pfropfpolymerisat und daraus hergestellte thermoplastische Formmasse mit verbesserter Zähigkeit**
Particulate graft polymers and thermoplastic moulding compositions with improved toughness prepared therefrom
Polymères greffés sous forme de particule et masse à mouler thermoplastique à ténacité améliorée préparée à partir de ceux-ci

(30) Priorität: 06.04.1990 DE 4011163
(43) Veröffentlichungstag der Anmeldung: 09.10.1991
(73) Patentinhaber: BASF Aktiengesellschaft, 67063 Ludwigshafen (DE)
(72) Erfinder: Seitz, Friedrich, Dr., W-6701 Friedelsheim (DE); Ruppmich, Karl, W-6700 Ludwigshafen (DE); Guentherberg, Norbert, Dr., W-6500 Mainz 22 (DE); Niessner, Norbert, Dr., W-6701 Friedelsheim (DE)

(56) Entgegenhaltungen:
- DE-A- 1 807 869
- US-A- 3 632 683

## Beschreibung

Die Erfindung betrifft teilchenförmige Pfropfpolymerisate, die als Weichkomponente für thermoplastische Formmassen geeignet sind.

Die Herstellung teilchenförmiger Pfropfpolymerisate aus einem kautschukelastischen Kern, d.h. einem Polymeren mit einer Glasübergangstemperatur von unter 0°C, und einer Pfropfhülle, z.B. durch Emulsionspolymerisation, ist bekannt. Hierzu wird zunächst durch Emulsionspolymerisation geeigneter Monomerer eine Pfropfgrundlage hergestellt. Die Monomeren, die die Pfropfhülle bilden sollen, werden dann in Gegenwart der Pfropfgrundlage so polymerisiert, daß ein möglichst hoher Anteil auf die Pfropfgrundlage aufgepfropft wird. Die teilchenförmige Pfropfpolymerisate werden zur Verbesserung der Schlagzähigkeit an sich spröder, schlagempfindlicher Thermoplaste verwendet. Dabei werden die Monomeren für die Pfropfhülle so gewählt, daß diese mit dem zu modifizierenden Thermoplasten verträglich ist. Die Herstellung solcher Schlagzähmodifier ist seit langem bekannt und z.B. in der US-PS 30 55 859 und der DE-PS 12 60 135 beschrieben.

Ein Hauptproblem bei der Herstellung solcher teilchenförmiger Pfropfpolymerisate ist die Anbindung der Pfropfhülle an die Pfropfgrundlage. Bei schlechter Anbindung ist die schlagzähmodifizierende Wirkung nicht ausreichend, so daß nur Produkte mit verminderter Zähigkeit erhalten werden können. Zur Verbesserung der Anbindung wurden eine Reihe von Maßnahmen vorgeschlagen, von denen hier nur die Verwendung "pfropfaktiver" (graft-linking bzw. graft-enhancing) Monomerer bei der Herstellung der Pfropfgrundlage genannt sei (z.B. US-PS 47 64 563, EP-A-231 933).

Nach einer in der EP-A-231 933 gegebenen Definition unterscheiden sich "pfropfaktive" Monomere von "vernetzend wirkenden" (cross-linking) Monomeren dadurch, daß pfropfaktive Monomere zwei oder mehr polymerisierbare Doppelbindungen enthalten, die sich in ihrer Reaktivität bezüglich der Polymerisation deutlich unterscheiden, während die Doppelbindungen vernetzend wirkender Monomerer annähernd gleiche Reaktivität aufweisen. Man weiß jedoch, daß eine solch scharfe Unterscheidung in der Regel nicht möglich ist, weil auch die weniger reaktiven Doppelbindungen der pfropfaktiven Monomeren bereits bei der Herstellung der Pfropfgrundlage teilweise reagieren und damit zu einer erhöhten Vernetzung der Pfropfgrundlage führen. Sie stehen damit für Pfropfreaktionen nicht mehr zur Verfügung. Andererseits läßt sich der Anteil der pfropfaktiven Monomeren an der Pfropfgrundlage nicht beliebig erhöhen, weil ihre vernetzende Wirkung zu einer Versprödung des als Pfropfgrundlage verwendeten elastomeren Polymerisats führt.

An sich ist bekannt (vgl. DE-A 34 21 353), sowohl saure als auch gleichzeitig basische Monomere in der Pfropfhülle einer Kautschukkomponente zu verwenden; dies soll dazu dienen, Polymere mit matter Oberfläche zu erzeugen. Die Wirkung der Verwendung eines sauren Monomeren im Kautschuk und gleichzeitiger Einsatz einer Base in der Pfropfhülle im Sinne einer deutlich verbesserten Kerbschlagzähigkeit ist bisher nicht beschrieben.

Es wurde nun gefunden, daß die Anbindung der Pfropfhülle (B) an die Pfropfgrundlage (A) erheblich verbessert werden kann, wenn als Pfropfgrundlage (A) ein Polymerisat verwendet wird, das entweder 85 bis 99,8 Gew.-% eines Alkylacrylats (A1) mit 1 bis 8 Kohlenstoffatomen im Alkylrest, 0,1 bis 5 Gew.-% eines polyfunktionellen, vernetzend wirkenden Monomeren (A2) und 0,2 bis 10 Gew.-% eines eine saure Gruppe enthaltenden Monomeren (A3) oder mindestens 50 Gew.-% eines Diens (A11) und bis zu 50 Gew.-% mindestens eines weiteren ethylenisch ungesättigten Monomeren (A12) sowie bis zu 10 Gew.-% eines eine saure Gruppe enthaltenden Monomeren (A13) einpolymerisiert enthält, auf das als Pfropfhülle (B) ein Monomerengemisch aus 50 bis 89.9 Gew.-% eines vinylaromatischen Monomeren (B1), 10 bis 49,9 Gew.-% eines polaren, copolymerisierbaren, ethylenisch ungesättigten Monomeren (B2) und 0,1 bis 10 Gew.-% eines eine basische Gruppe enthaltenden Monomeren (B3) aufgepfropft wird.

Die erfindungsgemäßen Pfropfpolymeren haben die Zusammensetzung 30 - 80 gew.-% A und 20 - 70 gew.-% B, bevorzugt 55 bis 70 Gew.-% A und 30 bis 45 Gew.-% B; die Anteile der Einzelbestandteile, bezogen jeweils auf A bzw. B sollten bevorzugt sein
- A1:: 92 bis 99,6 Gew.-%
- A2:: 0,2 bis 4 Gew.-%
- A3:: 0,2 bis 5 Gew.-%
- A11:: 80 bis 99,8 Gew.-%
- A12:: 0 bis 20 Gew.-%
- A13:: 0,2 bis 5 Gew.-%
- B1:: 65 bis 84,8 Gew.-%
- B2:: 15 bis 30 Gew.-%
- B3:: 0,2 bis 5 Gew.-%.

Der Vollständigkeit halber sei hinzugefügt, daß für diese Angaben die Monomeren B1 bis B3, die nicht im Wege der Pfropfung mit dem Pfropfkern verbunden, sondern lediglich als okkludierte Polymere eingebaut sind, der Pfropfhülle zugerechnet werden. B1 bis B3 gibt somit die bei der Herstellung zugegebenen Mengen an.

Gegenstand der Erfindung sind somit teilchenförmige Pfropfpolymerisate der vorstehenden, herstellungsbedingten Zusammensetzung sowie unter Verwendung solcher Pfropfpolymerisate hergestellte thermoplastische Formmassen. über die teilchenförmigen Pfropfpolymerisate, ihre Bestandteile, ihre Herstellung und die Gewinnung entsprechender Formmassen ist im einzelnen das Folgende zu sagen:

Die teilchenförmigen Pfropfpolymerisate werden aus einer Pfropfgrundlage (Kautschuk) A und einer Pfropfhülle B in an sich bekannter Weise erhalten. Als Kautschuk A dient entweder ein vernetztes Acrylsäureester-Polymerisat oder ein Diencopolymerisat mit einer Glasübergangstemperatur unter 0°C, bevorzugt unter -20°C, besonders bevorzugt unter -30°C (die Glasübergangstemperatur wird z.B. nach der DSC-Methode ermittelt; K.H. Illers, Makromol. Chemie 127 (1969) s. 1).

Als Monomere A1 kommen Acrylsäureester mit 1 bis 8 Kohlenstoffatomen, mindestens teilweise solche mit 4 bis 8 Kohlenstoffatomen, im Alkylrest in Betracht. Als geeignet seien besonders Acrylsäure-n-butylester und Acrylsäureethylhexylester genannt. Die Acrylsäureester können jeweils allein oder auch in Mischung miteinander eingesetzt werden.

Zur Erzielung guter mechanischer Eigenschaften hat es sich als notwendig erwiesen, daß das als Pfropfgrundlage verwendete Acrylsäureester-Polymerisat vernetzt ist. Hierzu wird die Polymerisation der Acrylsäureester in Gegenwart von 0,1 bis 5 Gew.-%, vorzugsweise von 0,2 bis 4 Gew.-%, bezogen auf das Gesamtgewicht der bei der Herstellung der Pfropfgrundlage eingesetzten Monomeren, eines copolymerisierbaren, polyfunktionellen, die Vernetzung bewirkenden Monomeren A2 durchgeführt. Es eignen sich Monomere, die mindestens zwei zur Copolymerisation befähigte ethylenische Doppelbindungen enthalten, die nicht in 1,3-Stellung konjugiert sind. Beispiele sind Divinylbenzol, Diallylmaleat, Diallylfumarat, Diallylphthalat, Allylmethacrylat, Triallylcyanurat oder Triallylisocyanurat. Als besonders günstiges Vernetzungsmonomeres hat sich der Acrylsäureester des Tricyclodecenylalkohols erwiesen (vgl. DE-PS 12 60 135).

Zur Verbesserung der Anbindung der Pfropfhülle an die Pfropfgrundlage enthält das zur Herstellung der Pfropfgrundlage verwendete Monomerengemisch des weiteren noch bis zu bzw. 0,2 bis 10 Gew.-%, bevorzugt 0,2 bis 5 Gew.-%, eines oder mehrerer Monomerer, die eine oder mehrere saure Gruppen enthalten (A3) bzw. (A13). Als saure Gruppen kommen insbesondere Carbonsäure- oder Sulfonsäuregruppen in Frage. Bevorzugte saure Monomere A3 (A13) sind alpha,beta-ungesättigte Carbonsäuren wie Acrylsäure oder Methacrylsäure, ferner Citraconsäure, Crotonsäure, Fumarsäure, Itaconsäure, Maleinsäure, Vinylsulfonsäure, Vinylbenzolsulfonsäure oder Zimtsäure.

Als Monomere A11 kommen Butadien, Isopren und deren Derivate in Betracht, sowie gegebenenfalls ein Styrolmonomer A12 und - ebenfalls bedarfsweise - eines der vorgenannten Comonomeren A3 (bzw. A13) mit einer sauren Gruppe.

Die Herstellung des Pfropfmischpolymerisats kann nach der in der DE-PS 12 60 135 beschriebenen Methode erfolgen. Hierzu wird zunächst die Pfropfgrundlage A hergestellt; wenn die Pfropfgrundlage ein Acrylatkautschuk sein soll, wird der oder die Acrylsäureester A1, das polyfunktionelle Monomere A2 und das erfindungsgemäße saure Monomere A3 in wäßriger Emulsion bei 20 bis 100°C, bevorzugt zwischen 50 und 80°C polymerisiert. Es können die üblichen Emulgatoren wie die Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen verwendet werden. Vorzugsweise nimmt man die Natriumsalze von Alkylsulfonaten oder von Fettsäuren mit 10 bis 18 Kohlenstoffatomen. Es ist günstig, die Emulgatoren in einer Menge von 0,5 bis 5 Gew.-%, insbesondere von 1 bis 2 Gew.-%, bezogen auf das Gesamtgewicht der für die Herstellung der Pfropfgrundlage verwendeten Monomeren, einzusetzen. Im allgemeinen wird bei einem Wasser/Monomer-Verhältnis von 2 : 1 bis 0,7 : 1 gearbeitet. Als Polymerisationsinitiatoren dienen insbesondere die gebräuchlichen Persulfate, wie z.B. Kaliumperoxodisulfat; es sind jedoch auch Redoxsysteme geeignet. Die Menge an Initiatoren (z.B. 0,1 bis 1 Gew.-%, bezogen auf das Gesamtgewicht der Monomeren) richtet sich in bekannter Weise nach dem gewünschten Molgewicht.

Als Polymerisationshilfsstoffe können die üblichen Puffersubstanzen, durch welche pH-Werte von vorzugsweise 6 bis 9 eingestellt werden, z.B. Natriumbicarbonat und Natriumpyrophosphat, sowie bis 3 Gew.-% eines Molekulargewichtsreglers, wie Mercaptan, Terpinol oder dimeres alpha-Methylstyrol verwendet werden.

Die genauen Polymerisationsbedingungen, insbesondere Art, Dosierung und Menge des Emulgators werden innerhalb der oben angegebenen Bereiche so bestimmt, daß der erhaltene Latex des vernetzten Acrylsäureester-Polymerisats einen d₅₀-Wert im Bereich von etwa 30 bis 1000 nm, bevorzugt im Bereich von 50 bis 800 nm besitzt.

### Wenn der Pfropfkern ein Dienkautschuk sein soll, wird zweckmäßig wie folgt verfahren:

Das Elastomer, die Pfropfgrundlage A wird hergestellt, indem A11 allein, gegebenenfalls zusammen mit den weiteren Comonomeren in wäßriger Emulsion in an sich bekannter Weise bei Temperaturen von 20 bis 100°C, vorzugsweise von 50 bis 80°C, polymerisiert werden. Es können die üblichen Emulgatoren, wie Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen, verwendet werden. Vorzugsweise nimmt man die Natriumsalze von Alkylsulfonaten oder Fettsäuren mit 10 bis 18 Kohlenstoffatomen. Es ist günstig, die Emulgatoren in Mengen von 0,5 bis 5 Gew.-%, insbesondere von 0,5 bis 2 Gew.-%, bezogen auf die bei der Herstellung der Pfropfgrundlage A eingesetzten Monomeren, einzusetzen. Im allgemeinen wird bei einem Wasser- und Monomeren-Verhältnis von 2:1 bis 0,7:1 gearbeitet. Als Polymerisationsinitiatoren dienen insbesondere die gebräuchlichen Persulfate, wie Kaliumpersulfat, es können jedoch auch Redox-Systeme zum Einsatz gelangen. Die Initiatoren werden im allgemeinen in Mengen von 0,1 bis 1 Gew.-%, bezogen auf die bei der Herstellung der Pfropfgrundlage A eingesetzten Monomeren, eingesetzt. Als weitere Polymerisationshilfsstoffe können die üblichen Puffersubstanzen, durch welche pH-Werte von vorzugsweise 6 bis 9 eingestellt werden - z.B. Natriumbicarbonat und Natriumpyrophosphatdienen; ferner werden in der Regel 0,1 bis 3 Gew.-%, eines Molekulargewichtsreglers - wie Mercaptane, Terpinole oder dimeres α-Methylstyrol - bei der Polymerisation verwendet werden.

Die genauen Polymerisationsbedingungen, insbesondere Art, Dosierung und Menge des Emulgators, werden innerhalb der oben angegebenen Bereiche im einzelnen so gewählt, daß der erhaltene Latex des Polymerisates A einen d₅₀-Wert im Bereich von etwa 100 bis 750 nm, vorzugsweise im Bereich von 100 bis 600 nm, besitzt. Oder aber das Emulsionspolymerisat mit mittleren Teilchengrößen im Bereich von 60 bis 150 nm wird in bekannter Weise agglomeriert (vgl. DE-AS 24 27 960).

### Pfropfhülle B:

Zur Herstellung des Pfropfmischpolymerisates aus Kern und Pfropfhülle wird in Gegenwart des erhaltenen Latex A ein Monomerengemisch aus 50 bis 89,9 Gew.-% mindestens eines vinylaromatischen Monomeren B1, 10 bis 49,9 Gew.-% mindestens eines polaren, copolymerisierbaren Monomeren B2 und 0,1 bis 10 Gew.-% mindestens eines basischen Monomeren B3 polymerisiert. Beispiele für vinylaromatische Monomere sind Styrol, alpha-Methylstyrol und kernalkylierte Styrole wie p-Methylstyrol und tert.-Butylstyrol. Besonders bevorzugt werden Styrol, alpha-Methylstyrol und p-Methylstyrol eingesetzt. Beispiele für polare, copolymerisierbare, ethylenisch ungesättigte Monomere B2 sind Acrylnitril, Methacrylnitril, Acrylsäure- und Methacrylsäurealkylester mit 1 bis 4 Kohlenstoffatomen im Alkylrest. Bevorzugt werden Acrylnitril, Methylmethacrylat und Gemische derselben. Geeignete basische Monomere B3 sind mit B1 und B2 copolymerisierbare Monomere, die mindestens eine basische Gruppe im Molekül enthalten, wie die Aminoalkylacrylate oder -methacrylate mit mindestens einer Aminogruppe im Alkylrest oder copolymerisierbare, ethylenisch ungesättigte Verbindung mit einem stickstoffhaltigen heterocyclischen Substituenten. Bevorzugte Monomere B3 enthalten im Molekül eine tertiäre Aminogruppe. Hier seien als Beispiele genannt: Dimethylaminoethyl(meth)acrylat, Morpholinmethacrylat, N-Vinylimidazol, p-Dimethylaminostyrol, N-Vinylcarbazol, N-Vinylindol, N-Vinylpyrrol, 4-Vinylpyrimidin, 2-Vinylpyridin, 3-Vinylpyridin, 4-Vinylpyridin sowie deren Gemische. Besonders bevorzugte Monomere sind Ester der Acrylsäure oder Methacrylsäure mit aliphatischen Alkoholen, die im Alkylrest eine tertiäre Aminogruppe enthalten. Als Beispiel seien Dimethylaminoethylacrylat und -methacrylat genannt. Bevorzugte Monomerengemische enthalten 65 bis 84,8 (70 bis 79,5) Gew.-% Styrol und/oder alpha-Methylstyrol, 15 bis 40 (20 bis 35) Gew.-% Acrylnitril und 0,2 bis 5 (0,5 bis 3) Gew.-% der basischen Verbindung, wobei Dimethylaminoethylacrylat bevorzugt ist.

Es ist vorteilhaft, die Pfropfmischpolymerisation auf das als Pfropfgrundlage A dienende Polymerisat wiederum in wäßriger Emulsion durchzuführen. Sie kann im gleichen System wie die Polymerisation der Pfropfgrundlage vorgenommen werden, wobei weiterer Emulgator und Initiator zugegeben werden kann. Diese müssen mit den zur Herstellung der Pfropfgrundlage A verwendeten Emulgatoren bzw. Initiatoren nicht identisch sein. So kann es z.B. zweckmäßig sein, als Initiator für die Herstellung der Pfropfgrundlage A ein Persulfat zu verwenden, zur Polymerisation der Pfropfhülle B jedoch ein Redoxinitiatorsystem einzusetzen. Im übrigen gilt für die Wahl von Emulgator, Initiator und Polymerisationshilfsstoffen das bei der Herstellung der Pfropfgrundlage A Gesagte. Das aufzupfropfende Monomerengemisch kann dem Reaktionsgemisch auf einmal, absatzweise in mehreren Stufen oder vorzugsweise kontinuierlich während der Polymerisation zugegeben werden. Die Pfropfmischpolymerisation wird so gesteuert, daß ein Pfropfgrad von 10 bis 45 Gew.-%, vorzugsweise von 15 bis 40 Gew.-%, resultiert.

Die erfindungsgemäßen teilchenförmigen Pfropfpolymerisate können für sich allein als Formmassen verwendet werden. Hierzu können sie z.B. durch Sprühtrocknung aufgearbeitet werden. Bevorzugt werden die teilchenförmigen Pfropfpolymerisate in einer Menge von z.B. 1 bis 50 gew.-% jedoch zur Abmischung mit 50 bis 99 gew.-% eines Thermoplasten verwendet, um dessen Schlagzähigkeit zu erhöhen. Zur Modifizierung geeignete Thermoplaste haben Glasübergangstemperaturen über 25°C, bevorzugt über 60°C, besonders bevorzugt über 80°C. Sie werden im folgenden auch als Hartkomponente (Matrix) bezeichnet. Beispiele für geeignete Hartkomponenten sind Polyvinylchlorid, Polymethylmethacrylat sowie insbesondere Copolymere aus einem vinylaromatischen Monomeren und einem polaren, copolymerisierbaren, ethylenisch ungesättigten Monomeren. Geeignete vinylaromatische sowie polare, copolymerisierbare, ethylenisch ungesättigte Monomere sind auch hier die bei der Herstellung der Pfropfhülle als B1 und B2 genannten. Besonders bevorzugte Hartkomponenten sind Styrol-Acrylnitril und alpha-Methylstyrol-Acrylnitril-Copolymere. Die Einarbeitung der erfindungsgemäßen teilchenförmigen Pfropfpolymerisate kann z.B. dadurch erfolgen, daß das teilchenförmige Pfropfpolymerisat durch Zugabe eines Elektrolyten aus der Emulsion isoliert wird und anschließend, gegebenenfalls nach Trocknung, durch gemeinsames Extrudieren, Kneten oder Walzen mit der Hartkomponente vermischt wird.

Die erfindungsgemäßen thermoplastischen Formmassen können als weitere Bestandteile Zusatzstoffe enthalten, wie sie für thermoplastische Formmassen üblich sind. Als solche seien beispielsweise genannt: Füllstoffe, weitere, verträgliche Kunststoffe, Antistatika, Antioxidantien, Flammschutzmittel, Schmiermittel, Farbstoffe und Pigmente. Die Zusatzstoffe werden in üblichen Mengen, vorzugsweise in Mengen von bis zu 30 Gew.-%, bezogen auf das Gesamtgewicht der thermoplastischen Formmasse, eingesetzt. Verträgliche Kunststoffe können auch einen höheren Anteil ausmachen.

Die erfindungsgemäßen Massen lassen sich nach den für die Thermoplastverarbeitung üblichen Verfahren, wie z.B. Extrusion und Spritzgießen, zu den verschiedenartigsten Formkörpern, wie z.B. Fensterprofilen, Gartenmöbeln, Booten, Schildern, Lampenabdeckungen, Automobilteilen und Kinderspielzeug verarbeiten. Die erfindungsgemäßen Massen eignen sich besonders zur Herstellung von Formkörpern, bei denen eine hohe Schlagzähigkeit gefordert ist. Die erfindungsgemäßen Formmassen weisen gegenüber dem Stand der Technik eine deutlich mattere Oberfläche auf.

Die in der vorliegenden Anmeldung beschriebenen Parameter wurden wie folgt bestimmt:
1. Bei der Angabe der mittleren Teilchengröße handelt es sich in allen Fällen um das Gewichtsmittel der Teilchengröße, wie sie mittels einer analytischen Ultrazentrifuge entsprechend der Methode von W. Scholtan und H. Lange, Kolloid-Z. und Z.-Polymere 250 (1972) Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als d₅₀-Wert der integralen Masseverteilung bezeichnet wird, ist dabei als der Wert definiert, bei dem 50 Gewichtsprozent der Teilchen einen kleineren und 50 Gewichtsprozent der Teilchen einen größeren Durchmesser als der d₅₀-Wert aufweisen.
2. Die Kerbschlagzähigkeit [in kJ/m²] der Produkte wurde nach DIN 53 453 an gespritzten Normkleinstäben bei 23°C gemessen. Untersucht wurden jeweils drei Probenserien bei drei verschiedenen Spritztemperaturen. Die gefundenen Ergebnisse für die Beispiele sind in Tabelle 1 zusammengefaßt.
3. Die Viskositätszahlen [in cm³/g] wurden an einer 0,5 %igen Lösung in Methylethylketon bestimmt. Gelanteile wurden vor der Messung durch Zentrifugieren entfernt und die Einwaage entsprechend korrigiert.

Die in den Beispielen genannten Teile und Prozente beziehen sich, soweit nicht anders angegeben, auf das Gewicht.

### Beispiele

### 1. Herstellung der Pfropfgrundlage A

Die Herstellung der jeweiligen Pfropfgrundlage auf Acrylesterbasis (A1, A2, A3) erfolgte nach folgender allgemeiner Vorschrift:
160 g des in Tabelle 1 zur Herstellung der Pfropfgrundlage A angegebenen Monomerengemisches wurden in 1500 g Wasser unter Zusatz von 5 g des Natriumsalzes einer C₁₂- bis C₁₈-Paraffinsulfonsäure, 3 g Kaliumperoxodisulfat, 3 g Natriumhydrogencarbonat und 1,5 g Natriumpyrophosphat unter Rühren auf 60°C erwärmt. 10 Minuten nach dem Anspringen der Polymerisationsreaktion wurden innerhalb von 3 Stunden weitere 840 g der in Tabelle 1 angegebenen Mischung zugegeben. Nach Beendigung der Monomerzugabe wurde die Emulsion noch eine Stunde bei 60°C gehalten.

### 2. Herstellung der teilchenförmigen Pfropfpolymerisate

2100 g der nach obiger Vorschrift (1) hergestellten Emulsion wurden mit 1150 g Wasser und 2,7 g Kaliumperoxodisulfat gemischt und unter Rühren auf 65°C erwärmt. Nach Erreichen der Reaktionstemperatur wurden im Lauf von 3 Stunden 560 g des in Tabelle 1 für die Herstellung der Pfropfhülle B angegebenen Monomerengemisches zudosiert. Nach Beendigung der Zugabe wurde die Emulsion poch 2 Stunden bei 65°C gehalten. Das Pfropfpolymerisat wurde mittels Calciumchloridlösung bei 95°C aus der Emulsion gefällt, mit Wasser gewaschen und im warmen Luftstrom getrocknet.

Für eine Pfropfgrundlage auf Dienbasis (A11, A12, A13) verfährt man z.B. wie folgt:
Durch Polymerisation von 600 g Butadien in Gegenwart einer Lösung von 6 g tert.-Dodecylmercaptan, 6 g Methacrylsäure, 7 g C₁₄-Na-Alkylsulfonat als Emulgator, 2 g Kaliumperoxodisulfat und 2 g Natriumpyrophosphat in 800 ml Wasser wird bei 65°C ein Polybutadienlatex hergestellt. Der Umsatz beträgt 98 %.

Es wird ein Latex erhalten, dessen mittlere Teilchengröße bei 0,1 »m liegt.

Der erhaltene Latex wird durch Zusatz von 25 g einer Emulsion eines Copolymeren aus 96 Teilen Ethylacrylat und 4 Teilen Methacrylsäureamid mit einem Feststoffgehalt von 10 Gew.-% agglomeriert, wobei ein Polybutadienlatex mit einer mittleren Teilchengröße von 0,35 »m entsteht.

Nach Zusetzen von 400 g Wasser, 4 g Na-C₁₄-Alkylsulfonat und 2 g Kaliumperoxodisulfat werden 400 g einer Mischung aus Styrol und Acrylnitril sowie der basischen Komponente B3 in den in Tabelle 1 angegebenen Verhältnissen innerhalb von 4 Stunden zugeführt. Die Polymerisation erfolgt unter Rühren des Ansatzes bei 75°C. Der Umsatz, bezogen auf Styrol-Acrylnitril ist praktisch quantitativ. Die erhaltene Pfropfkautschukdispersion wird mittels Calciumchloridlösung gefällt und das abgetrennte Pfropfmischpolymerisat mit destilliertem Wasser gewaschen und getrocknet.

### 3. Abmischung mit Hartkomponente

Zur Herstellung der Abmischungen wurde als Hartkomponente ein Styrol/Acrylnitril-Copolymerisat mit einem Acrylnitril-Gehalt von 35 % und einer Viskositätszahl von 80 ml/g verwendet. Das gefällte und getrocknete Pfropfmischpolymerisat aus (2) wurde auf einem Extruder bei 260°C so mit der Hartkomponente abgemischt, daß das resultierende Gemisch einen Pfropfpolymerisatanteil von 50 bzw. 46 % aufwies. Aus diesem Gemisch wurden durch Spritzguß Formteile hergestellt.

**Tabelle 1**

| | Pfropfgrundlage A¹ | | | Pfropfhülle B² | | | Spritztemperatur³ | Kerbschlagzähigkeit [kJ/m²] |
|---|---|---|---|---|---|---|---|---|
| | BA | DCPA | MAS | S | AN | DMAEA | | |
| 1 | 97 | 2 | 1 | 74 | 25 | 1 | 220°C | 26 |
| | | | | | | | 250°C | 27 |
| | | | | | | | 280°C | 26 |
| 2 | 97 | 2 | 1 | 73 | 25 | 2 | 220°C | 25 |
| | | | | | | | 250°C | 25 |
| | | | | | | | 280°C | 22 |
| 3 | 96 | 2 | 2 | 74 | 25 | 1 | 220°C | 27 |
| | | | | | | | 250°C | 26 |
| | | | | | | | 280°C | 22 |
| 4 | 96 | 2 | 2 | 73 | 25 | 2 | 220°C | 24 |
| | | | | | | | 250°C | 22 |
| | | | | | | | 280°C | 21 |
| 5 | 93 | 2 | 5 | 74 | 25 | 1 | 220°C | 22 |
| | | | | | | | 250°C | 22 |
| | | | | | | | 280°C | 21 |
| V⁴ | 98 | 2 | - | 75 | 25 | - | 220°C | 6 |
| | | | | | | | 250°C | 9 |
| | | | | | | | 280°C | 14 |

| | | | | | | | | |
|---|---|---|---|---|---|---|---|---|
| ¹ Zusammensetzung des zur Herstellung der Pfropfgrundlage A verwendeten Monomerengemisches | | | | | | | | |
| ² Zusammensetzung des zur Herstellung der Pfropfhülle B verwendeten Monomerengemisches | | | | | | | | |
| ³ Massetemperatur der thermoplastischen Formmasse beim Spritzguß | | | | | | | | |
| ⁴ Vergleichsversuch entsprechend dem Stand der Technik | | | | | | | | |
| BA = Butylacrylat DCPA = Acrylsäureester des Tricyclodecenylalkohols MAS = Methacrylsäure S = Styrol AN = Acrylnitril DMAEA = Dimethylaminoethylacrylat | | | | | | | | |

**Tabelle 2**

| Pfropfgrundlage A¹ | | | Pfropfhülle B² | | | Kerbschlagzähigkeit ³ [kJ/m²] [23°C] |
|---|---|---|---|---|---|---|
| | BU | MAS | S | AN | Base | |
| 1 | 100 | - | 70 | 30 | - | 18 |
| 2 | 99 | 1 | 69 | 30 | 1 DMAEA | 31 |
| 3 | 99 | 1 | 68 | 30 | 2 DMAEA | 28 |
| 4 | 98 | 2 | 69 | 30 | 1 DMAEA | 29 |
| 5 | 98 | 2 | 68 | 30 | 2 DMAEA | 30 |
| 6 | 99 | 1 | 68 | 30 | 2 VI | 33 |
| Nr. 1: Vergleichsversuch entsprechend dem Stand der Technik BU = Butadien MAS = Methacrylsäure S = Styrol AN = Acrylnitril DMAEA = Dimethylaminoethylacrylat VI = Vinylimidazol | | | | | | |

| | | | | | | |
|---|---|---|---|---|---|---|
| ¹ Zusammensetzung des zur Herstellung der Pfropfgrundlage A verwendeten Monomerengemisches | | | | | | |
| ² Zusammensetzung des zur Herstellung der Pfropfhülle B verwendeten Monomerengemisches | | | | | | |
| ³ Die Massetemperatur beim Spritzguß betrug einheitlich 250°C. | | | | | | |

## Patentansprüche

1. Teilchenförmiges Pfropfpolymerisat, bestehend aus
A: 30 bis 80 Gew.-% mindestens eines elastomeren Polymerisats A mit einer mittleren Teilchengröße von 30 bis 1000 nm aus -jeweils bezogen auf A -
A1: 85 bis 99,8 Gew.-% mindestens eines Alkylacrylates A1 mit 1 bis 8 Kohlenstoffatomen im Alkylrest,
A2: 0,1 bis 5 Gew.-% mindestens eines polyfunktionellen, vernetzend wirkenden Monomeren A2
und
A3: 0,1 bis 10 Gew.-% mindestens eines eine oder mehrere saure Gruppen enthaltenden Monomeren A3,
oder
A11: bis zu 99,8 Gew.-% eines Diens A11
A12: bis zu 50 Gew.-% mindestens eines vinylaromatischen Monomeren A12
A13 : 0,2 bis 10 Gew.-% mindestens eines eine oder mehrere saure Gruppen enthaltenden Monomeren A13
als Pfropfgrundlage, und
B: 20 bis 70 Gew.-% einer auf das elastomere Polymerisat A aufgepfropften Hülle B aus - bezogen auf B -
B1: 50 bis 89,9 Gew.-% mindestens eines vinylaromatischen Monomeren B1,
B2: 10 bis 49,9 Gew.-% mindestens eines polaren, copolymerisierbaren, ethylenisch ungesättigten Monomeren B2
und
B3: 0,1 bis 10 Gew.-% mindestens eines eine oder mehrere basische Gruppen enthaltenden Monomeren B3.

2. Pfropfpolymerisat nach Anspruch 1, enthaltend als Monomeres A3 (bzw. A13) eine α,β-olefinisch-ungesättigte Carbonsäure.

3. Pfropfpolymerisat nach Anspruch 1, enthaltend als vinylaromatisches Monomer B1 Styrol und/oder α-Methylstyrol.

4. Pfropfpolymerisat nach Anspruch 1, enthaltend als Monomeres B2 Acrylnitril und/oder Methylmethacrylat.

5. Pfropfpolymerisat nach Anspruch 1, enthaltend als Monomeres B3 ein Aminoalkylacrylat oder -methacrylat mit mindestens einer Aminogruppe im Alkylrest oder eine copolymerisierbare, ethylenisch ungesättigte Verbindung mit einem stickstoffhaltigen heterocyclischen Substituenten.

6. Thermoplastische Formmasse, im wesentlichen aus 1 bis 50 Gew.-% eines teilchenförmigen Pfropfpolymerisats nach Anspruch 1 und 50 bis 99 Gew.-% mindestens eines Polymeren mit einer Glasübergangstemperatur von mehr als 25°C als Matrix und gegebenenfalls untergeordneten Mengen an üblichen Zusatz- und Hilfsstoffen.

7. Thermoplastische Formmasse nach Anspruch 6, enthaltend als Matrix ein Copolymeres aus einem vinylaromatischen Monomeren und einem polaren, copolymerisierbaren, ethylenisch ungesättigten Monomeren.

## Claims

1. A particulate graft polymer comprising
A: from 30 to 80 % by weight of one or more elastomeric polymers A having a mean particle size of from 30 to 1000 nm, comprising, in each case based on A,
A1: from 85 to 99.8 % by weight of one or more alkyl acrylates A1 having from 1 to 8 carbon atoms in the alkyl radical,
A2: from 0.1 to 5 % by weight of one or more polyfunctional, crosslinking monomers A2,
and
A3: from 0.1 to 10 % by weight of one or more monomers A3 containing one or more acid groups,
or
A11: up to 99.8 % by weight of a diene A11,
A12: up to 50 % by weight of one or more vinyl-aromatic monomers A12,
A13: from 0.2 to 10 % by weight of one or more monomers A13 containing one or more acid groups,
as the graft base, and
B: from 20 to 70 % by weight of a shell B grafted onto the elastomeric polymer A and comprising, based on B,
B1: from 50 to 89.9 % by weight of one or more vinylaromatic monomers B1,
B2: from 10 to 49.9 % by weight of one or more polar, copolymerizable, ethylenically unsaturated monomers B2,
and
B3: from 0.1 to 10 % by weight of one or more monomers B3 containing one or more basic groups.

2. A graft polymer as claimed in claim 1, containing, as monomer A3 (or A13), an α,β-olefinically unsaturated carboxylic acid.

3. A graft polymer as claimed in claim 1, containing, as vinyl-aromatic monomer B1, styrene and/or α-methylstyrene.

4. A graft polymer as claimed in claim 1, containing, as monomer B2, acrylonitrile and/or methyl methacrylate.

5. A graft polymer as claimed in claim 1, containing, as monomer B3, an aminoalkyl acrylate or methacrylate containing one or more amino groups in the alkyl radical or a copolymerizable, ethylenically unsaturated compound having a nitrogen-containing heterocyclic substituent.

6. A thermoplastic molding material essentially comprising from 1 to 50 % by weight of a particulate graft polymer as claimed in claim 1 and from 50 to 99 % by weight of one or more polymers having a glass transition temperature of greater than 25°C as the matrix and, if desired, minor amounts of conventional additives and assistants.

7. A thermoplastic molding material as claimed in claim 6, containing, as the matrix, a copolymer comprising a vinyl-aromatic monomer and a polar, copolymerizable, ethylenically unsaturated monomer.

## Revendications

1. Polymères greffés sous forme de particule, constitués de
A : 30 à 80 % en poids d'au moins un polymère élastomère A présentant une granulométrie moyenne de 30 à 1.000 nm, constitué de - respectivement par rapport à A -
A1 : 85 à 99,8 % en poids d'au moins un acrylate d'alkyle A1 présentant 1 à 8 atomes de carbone dans le résidu alkyle,
A2 : 0,1 à 5 % en poids d'au moins un monomère polyfonctionnel et à action réticulante A2
et
A3 : 0,1 à 10 % en poids d'au moins un monomère A3 contenant un ou plusieurs groupes acides,
ou
A11 : jusqu'à 99,8 % en poids d'un diène A11
A12 : jusqu'à 50 % en poids d'au moins un monomère vinylaromatique A12
A13 : 0,2 à 10 % en poids d'au moins un monomère A13 contenant un ou plusieurs groupes acides
en tant que base de greffage, et
B : 20 à 70 % en poids d'une enveloppe B greffée sur le polymère élastomère A, constituée de - par rapport à B -
B1 : 50 à 89,9 % en poids d'au moins un monomère vinylaromatique B1,
B2 : 10 à 49,9 % en poids d'au moins un monomère éthyléniquement insaturé, copolymérisable et polaire B2
et
B3 : 0,1 à 10 % en poids d'au moins un monomère B3 contenant un ou plusieurs groupes basiques.

2. Polymères greffés selon la revendication 1, contenant en tant que monomère A3 (respectivement A13) un acide carboxylique oléfiniquement insaturé en position α,β.

3. Polymères greffés selon la revendication 1, contenant en tant que monomère vinylaromatique B1 du styrène et/ou de l'α-méthylstyrène.

4. Polymères greffés selon la revendication 1, contenant en tant que monomère B2 de l'acrylonitrile et/ou du méthacrylate de méthyle.

5. Polymères greffés selon la revendication 1, contenant en tant que monomère B3 un acrylate d'aminoalkyle ou un méthacrylate d'aminoalkyle présentant au moins un groupe amino dans le résidu alkyle ou un composé éthyléniquement insaturé et copolymérisable présentant un substituant hétérocyclique contenant de l'azote.

6. Masse à mouler thermoplastique, constituée essentiellement de 1 à 50 % en poids d'un polymère greffé sous forme de particule selon la revendication 1 et de 50 à 99 % en poids d'au moins un polymère présentant une température de transition vitreuse supérieure à 25°C en tant que matrice et, le cas échéant, de quantités mineures d'additifs et d'adjuvants courants.

7. Masse à mouler thermoplastique selon la revendication 6, contenant en tant que matrice un copolymère constitué d'un monomère vinylaromatique et d'un monomère éthyléniquement insaturé, copolymérisable et polaire.
